# EUROPEAN PATENT SPECIFICATION

(11) **EP 2 395 593 B1**
(45) Date of publication and mention of the grant of the patent: **05.11.2014**
(21) Application number: 11169237.2
(22) Date of filing: 09.06.2011
(51) Int. Cl.: H01M 2/12, H01M 10/44, H01M 10/42, H01M 2/34

(54) **Secondary battery**
Sekundärbatterie
Batterie secondaire

(30) Priority: 09.06.2010 US 344201 P; 02.06.2011 US 201113151550
(43) Date of publication of application: 14.12.2011
(73) Proprietor: Samsung SDI Co., Ltd., Gyeonggi-do (KR); Robert Bosch GmbH, 70442 Stuttgart (DE)
(72) Inventor: Byun, Sangwon, Yongin-si (KR)
(74) Representative: Gulde & Partner

(56) References cited:
- EP-A1- 2 500 959
- FR-A1- 2 743 452
- JP-A- H0 562 664
- JP-A- H10 284 034

## Description

### TECHNICAL FIELD

The present invention relates to a secondary battery.

### BACKGROUND ART

Unlike a primary battery, a rechargeable battery may be repeatedly charged and discharged. Lower capacity batteries including a built-in battery pack typically having one unit battery inside are used for various portable compact electronic devices such as cellular phones or camcorders. Large capacity batteries including a built-in battery pack typically having several tens of unit batteries connected are used as the power source for motor drive, such as in hybrid electric vehicles.

The secondary battery may be manufactured in various shapes, including, for example, a cylindrical type and a prismatic type. The secondary battery is generally constructed by accommodating an electrode assembly in a case together with an electrolyte, the electrode assembly including a separator serving as an insulator between a positive electrode plate and a negative electrode plate, and then coupling a cap assembly having electrode terminals to the case.

Meanwhile, when an excessively high heat is generated due to, for example, overcharging, or the electrolyte is decomposed, the internal pressure may increase, resulting in fire or explosion. Accordingly, there is a need for developing secondary batteries having improved safety.

FR 2 743 452 A1 discloses a secondary battery comprising an electrode assembly, a prism-shaped container accommodating the electrode assembly therein, a cap assembly attached to the case and including a cap plate having an opening and a seal causing a short circuit. The seal deforms when the internal pressure increases, thereby causing a contact of the outputs of positive and negative current through a PTC component. Here, the deformation is carried out within the small opening of the cap plate.

### SUMMARY OF THE INVENTION

The present invention is therefore directed to a secondary battery, which substantially overcome one or more of the problems due to the limitations and disadvantages of the related art.

Generally, it is a feature of an embodiment of the present invention to provide a secondary battery which can be protected by inducing a short circuit between electrodes when an internal pressure of a case increases.

Accordingly, a secondary battery is provided comprising an electrode assembly having a first electrode, a second electrode, and a separator interposed between the first and the second electrodes, a case accommodating the electrode assembly therein, a cap assembly attached to the case and including a cap plate having an opening, and a first short-circuiting member. The first short-circuiting member comprises an inverting portion provided within the opening of the cap plate, being in communication with and projecting into an interior of the case, and an edge portion having a fixing portion fixed to the cap plate. Inventively, a recess is formed in a surface of the edge portion contacting the cap plate.

The recess enhances the flexibility of the first short-circuiting member.

Preferably, the vertical cross-section of the recess is formed to have a rectangular, trapezoidal or triangular shape.

The edge portion may at least partially overlap with the cap plate and an opening of the recess in the edge portion may fully overlap with the cap plate.

In order to further enhance the flexibility, the recess may fully or may partially contact the cap plate, i.e. an opening of the recess is provided in the first short-circuiting member at a location where the recess partially of fully contacts the cap plate.

The depth or height of the recess may be at least 30% of the thickness of the edge portion, preferably at least 50%, even more preferably between 65% and 85%. A thickness less than 30% may not provide sufficient flexibility. A thickness of more than 85% of the thickness of the edge portion may result in damage of the first short-circuiting member during operation.

The edge portion may surround the inverting portion. Additionally or alternatively, the edge portion may be a circumferential portion of the inverting portion.

The cap plate is preferably provided with a step and the edge portion at least partially contacts the step. The thickness of the cap plate where the edge portion is formed on is preferably thinner than other parts of the cap plate.

In a preferred embodiment, the fixing portion and the recess are spaced apart from each other. The fixing portion may be a welding portion. The fixing portion may be configured to have a decreasing width from the top surface of the edge portion towards the bottom surface of the edge portion.

The recess is preferably configured to have a constant or decreasing width form the bottom surface of the edge portion towards the top surface of the edge portion.

A lower surface of the first short-circuiting member may be attached to an upper surface of the periphery of the opening in the cap plate.

Preferably, the inverting portion is adapted to invert its shape to protrude outwardly with respect to the case upon a pressure increase in the interior of the case.

Additionally, a second short-circuiting member may be formed on and insulated from the cap plate above the opening in the cap plate, the second short-circuiting member being electrically coupled to the second electrode and the first short-circuiting member being electrically coupled to the first electrode.

The inverting portion of the first short-circuiting member is preferably adapted to invert its shape to contact the second short-circuiting member upon an increase of a pressure in the interior of the case to connect the first electrode with the second electrode.

The second short-circuiting member may include a hole and a protrusion extending towards the first short-circuiting member and may be formed at locations corresponding to the location where the first short-circuiting member contacts the second short-circuiting member.

The first short-circuiting member may have the shape of a bowl.

According to the provision of the recess, flexibility during an inverting operation is provided to the inverted portion, thereby allowing the inverted portion to easily perform the inverting operation at a desired level of internal pressure.

In addition, the secondary battery according to the present invention includes a hole and a protrusion at regions of the second short-circuiting member corresponding to the inverted portion, thereby reducing contact resistance when the inverted portion performs an inverting operation, and allowing the inverted portion to contact the second short-circuiting member in a more secured manner.

### BRIEF DESCRIPTION OF THE DRAWINGS

FIG. 1 is a perspective view of a secondary battery according to an embodiment of the present invention;
FIG. 2 is a cross sectional view taken along the line A-A' of FIG. 1;
FIG. 3A is a partially enlarged view of a "B" portion of FIG. 2;
FIG. 3B is a partially enlarged view of a "C" portion of FIG. 3A;
FIG. 3C illustrates a state in which a short-circuiting member shown in FIG. 2 is inverted;
FIG. 4A is an enlarged view of a short-circuiting member of a secondary battery according to another embodiment of the present invention;
FIG. 4B is a partially enlarged view of a "D" portion of FIG. 4A;
FIG. 5A is an enlarged view of a short-circuiting member of a secondary battery according to still another embodiment of the present invention;
FIG. 5B is a partially enlarged view of an "E" portion of FIG. 5A;
FIG. 6A is an enlarged view of a short-circuiting member of a secondary battery according to still another embodiment of the present invention; and
FIG. 6B illustrates a state in which the short-circuiting member shown in FIG. 6A is inverted.

### DETAILED DESCRIPTION OF THE DRAWINGS

Example embodiments will now be described more fully hereinafter with reference to the accompanying drawings, in which exemplary embodiments of the invention are shown so that this disclosure will fully convey the scope of the invention to those skilled in the art.

A construction of a secondary battery according to an embodiment of the invention will now be described.

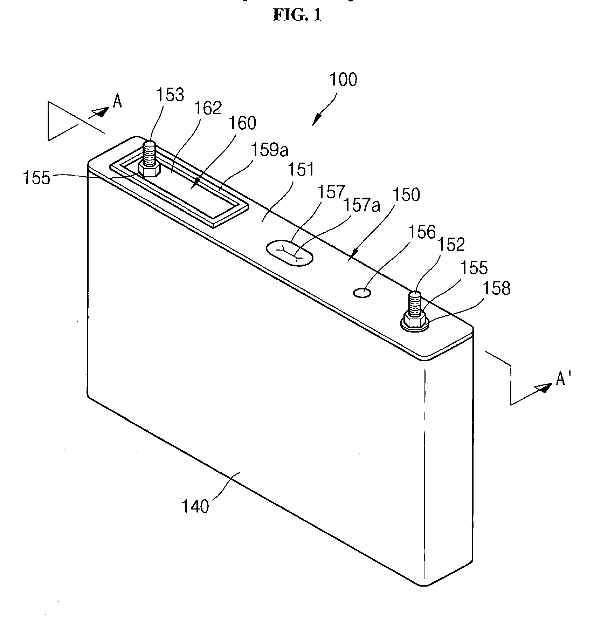

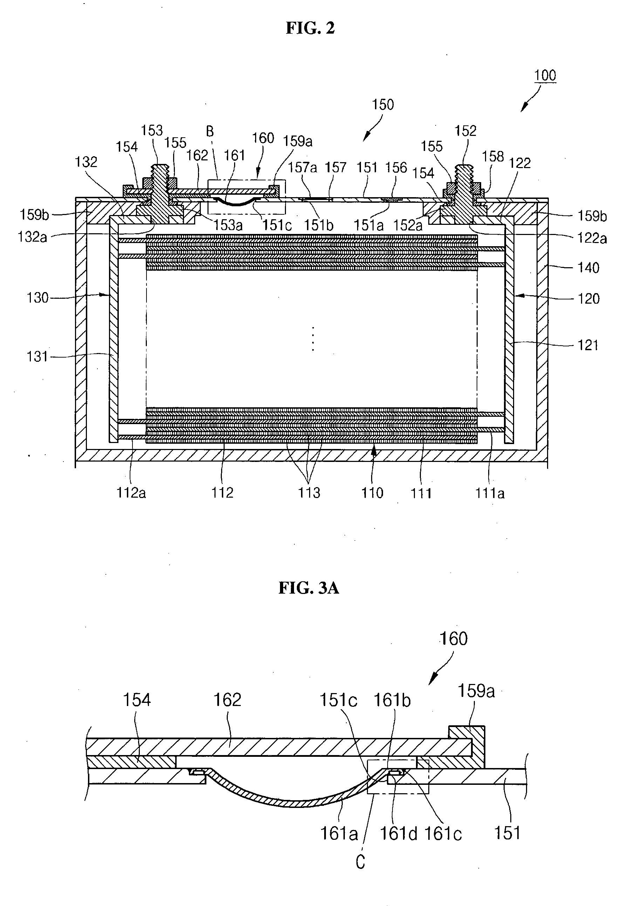

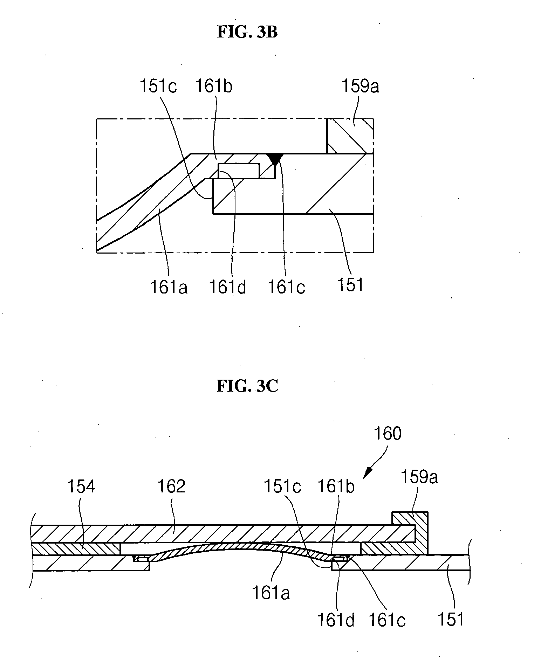

FIG. 1 is a perspective view of a secondary battery according to an embodiment of the present invention, FIG. 2 is a cross sectional view taken along the line A-A' of FIG. 1, FIG. 3A is a partially enlarged view of a "B" portion of FIG. 2, FIG. 3B is a partially enlarged view of a "C" portion of FIG. 3A, and FIG. 3C illustrates a state in which a short-circuiting member shown in FIG. 2 is inverted.

Referring to FIGS. 1 through 3C, the secondary battery 100 according to an embodiment of the present invention includes an electrode assembly110, a first collector plate 120, a second collector plate 130, a case 140, a cap assembly 150, and a short-circuiting member 160.

The electrode assembly 110 is formed by winding or folding a stacked structure including a first electrode plate 111 shaped of a thin plate or foil, a second electrode plate 112, and a separator 113 interposed between the first electrode plate 111 and the second electrode plate. Here, the first electrode plate 111 may be a positive electrode, and the second electrode plate 112 may be a negative electrode.

The first electrode plate 111 is formed by coating a first electrode active material such as a transition metal oxide on a first electrode collector made of a metal foil made of, for example, aluminum (Al), and includes a first electrode uncoated portion 111 a that is not coated with the first electrode active material. The first electrode uncoated portion 111a provides a current flow path between the first electrode plate 111 and the outside of the first electrode plate 111. However, the invention does not limit the material of the first electrode plate 111 to that listed herein.

The second electrode plate 112 is formed by coating a second electrode active material such as graphite or a carbon material on a second electrode collector made of a metal foil made of, for example, nickel (Ni) or copper (Cu), and includes a second electrode uncoated portion 112a that is not coated with the second electrode active material. The second electrode uncoated portion 112a provides a current flow path between the second electrode plate 112 and the outside of the second electrode plate 112. However, the invention does not limit the material of the second electrode plate 112 to those listed herein.

In addition, the first electrode plate 111 and the second electrode plate 112 may be arranged by reversing their polarities.

The separator 113, positioned between the first electrode plate 111 and the second electrode plate 112, prevents an electrical short therebetween and allows for movement of lithium ions. The separator 113 may be formed of polyethylene (PE), polypropylene (PP) or a composite film of PE and PP. However, the invention does not limit the material of the separator 113 to those listed herein.

The first collector plate 120 may be formed of a conductive material such as aluminum, and contacts the first electrode uncoated portion 111 a protruding to one end of the electrode assembly 110 to then be electrically connected to the first electrode plate 111.

The first collector plate 120 may include a coupling portion 121 and a bent portion 122.

The coupling portion 121 is plate-shaped and comes into contact with the first electrode uncoated portion 111 a. The coupling portion 121 is electrically connected to the first electrode uncoated portion 111 a to provide an electrical path allowing the first electrode uncoated portion 111 a to be connected to the outside.

The bent portion 122 is shaped of a plate bent from the coupling portion 121 at approximately 90 degrees, and is installed between an upper portion of the electrode assembly 110 and the cap assembly 150. The bent portion 122 includes a terminal hole 122a formed therein. The terminal hole 122a is formed at one side of the bent portion 122 to provide a space in which a first electrode terminal 152 of the cap assembly 150 is fittingly coupled to the terminal hole 122a.

The second collector plate 130 is formed of a conductive material such as nickel, and contacts the second electrode uncoated portion 112a protruding to the other end of the electrode assembly 110 to then be electrically connected to the second electrode plate 112. The second collector plate 130 may include a coupling portion 131 and a bent portion 132. The bent portion 132 may include a terminal hole 132a to provide a space in which a second electrode terminal 153a is fittingly coupled to the terminal hole 132a.

The coupling portion 131, the bent portion 132 and the terminal hole 132a of the second collector plate 130 have substantially the same configurations and functions as those of the coupling portion 121, the bent portion 122 and the terminal hole 122a of the first collector plate 120, and thus repeated explanations thereof will be omitted.

The case 140 is formed of a conductive metal such as aluminum, aluminum alloy or nickel-plated steel, and may have an approximately rectangular parallelepiped shape having an opening through which the electrode assembly 110, the first collector plate 120 and the second collector plate 130 are received to be settled on the case 140. Although the opening is not illustrated in FIG. 2 because the case 140 and the cap assembly 150 are coupled to each other, the opening practically corresponds to a portion formed when an upper peripheral portion of the cap assembly 150 is opened. Meanwhile, the internal surface of the case 140 is processed by insulation, so that it is insulated from the electrode assembly 110, the first collector plate 120, the second collector plate 130 and the cap assembly 150. The case 140 may function as an electrode having a polarity, for example, a cathode.

The cap assembly 150 is coupled to the case 140. The cap assembly 150 may include a cap plate 151, a first electrode terminal 152, a second electrode terminal 153, a gasket 154, and a nut 155. In addition, the cap assembly 150 may include a plug 156, a vent plate 157, a connection plate 158, an upper insulation member 159a, and a lower insulation member 159b.

The cap plate 151 seals an opening of the case 140 and may be formed of the same material as the case 140. The cap plate 151 may include an electrolyte injection hole 151 a, a vent hole 151 b, and a short-circuiting hole 151 c.

The first electrode terminal 152 penetrates through one side of the cap plate 151 and is then electrically connected to the first collector plate 120. The first electrode terminal 152 may be formed in a columnar shape. A thread is formed on the outer circumference of an upper part of the columnar-shaped first electrode terminal 152, exposed beyond the cap plate 151. A flange 152a is formed at a lower part of the columnar-shaped first electrode terminal 152, positioned below the cap plate 151, so as to prevent the first electrode terminal 152 from slipping away from the cap plate 151. A portion of the first electrode terminal 152 positioned lower than the flange 152a is fitted into the terminal hole 122a of the first collector plate 120. Here, the first electrode terminal 152 may be electrically connected to the cap plate 151.

The second electrode terminal 153 penetrates through the other side of the cap plate 151 and is then electrically connected to the second collector plate 130. Since the second electrode terminal 153 has substantially the same configuration as the first electrode terminal 152, a detailed description thereof will not be given. Here, the second electrode terminal 153 is insulated from the cap plate 151.

The gasket 154 is formed of an insulating material and is formed between each of the first and second electrode terminals 152 and 153 the cap plate 151. The gasket 154 seals a gap between each of the first and second electrode terminals 152 and 153 the cap plate 151. The gasket 154 prevents external moisture from infiltrating into the secondary battery 100, or prevents the electrolyte injected into the secondary battery 100 from flowing out.

The nut 155 is engaged with the thread formed in each of the first and second electrode terminals 152 and 153, and fixes the each of the first and second electrode terminals 152 and 153 on the cap plate 151.

The plug 156 seals the electrolyte injection hole 151 a of the cap plate 151. The vent plate 157 is installed in the vent hole 151 b of the cap plate 151. In addition, the vent plate 157 includes a notch 157a configured to be opened at a preset pressure.

The connection plate 158 is configured such that the first electrode terminal 152 is fitted into a portion between the cap plate 151 and the first electrode terminal 152. The connection plate 158 closely contacts the cap plate 151 and the gasket 154 by the nut 155. The connection plate 158 electrically connects the cap plate 151 and the first electrode terminal 152 to each other.

The upper insulation member 159a is configured such that the second electrode terminal 153 is fitted into a portion between the cap plate 151 and the second electrode terminal 153. The upper insulation member 159a closely contacts the cap plate 151 and the gasket 154. The upper insulation member 159a electrically insulates the cap plate 151 and the second electrode terminal 153 from each other.

The lower insulation member 159b is formed between each of the first collector plate 120 and the second collector plate 130 and the cap plate 151, and prevents an electric short from occurring therebetween.

The short-circuiting member 160 is installed at an upper portion of the cap assembly 150. When an internal pressure of the secondary battery 100 according to an embodiment of the present invention is greater than a reference pressure due to, for example, overcharging, the short-circuiting member 160 induces short-circuiting, thereby interrupting the flow of charging current. To this end, the short-circuiting member 160 may include first and second short-circuiting members 161 and 162, both of which are made of a conductive material.

The short-circuiting member 161 is formed while covering the short-circuiting hole 151c of the cap plate 151. The short-circuiting member 161 is electrically connected to the cap plate 151. In addition, when the internal pressure of the secondary battery 100 is greater than a preset reference pressure, the short-circuiting member 161 is inverted in an upwardly convex shape to then be connected to the second short-circuiting plate 162. The first short-circuiting member 161 may be formed of aluminum, but aspects of the present invention are not limited thereto.

The first short-circuiting member 161 is formed as an inversion plate including an inverted portion 161 a formed to be downwardly convex, and an edge portion 161 b fixed at the edge of the short-circuiting hole 151 c.

The inverted portion 161 a is formed to have an inwardly convex shape with respect to the case 140. The inverted portion 161 a is formed to cover the short-circuiting hole 151 c of the cap plate 151, thereby hermetically sealing the short-circuiting hole 151 c. The inverted portion 161 a has a predetermined extent of elasticity, and is inverted when the internal pressure of the case 140 exceeds a preset reference pressure. In a normal state, the inverted portion 161 a is electrically connected to the cap plate 151 but insulated from the second short-circuiting member 162. However, when the inverted portion 161 a is inverted, an upper part of the inverted portion 161 a comes into contact with the second short-circuiting member 162, thereby electrically connecting the cap plate 151 and the second short-circuiting member 162 to each other. Since the cap plate 151 is connected to the positive electrode terminal 152 and the second short-circuiting member 162 is connected to the negative electrode terminal 153, the positive electrode terminal 152 and the negative electrode terminal 153 are electrically disconnected from each other upon inverting of the inverted portion 161 a. Thus, an charging operation by the positive electrode terminal 152 and the negative electrode terminal 153 is discontinued, so that the internal pressure of the case 140 is suspended from increasing, thereby protecting the secondary battery 100 according to an embodiment of the present invention.

The edge portion 161 b is formed at the edge of the inverted portion 161 a. The edge portion 161 b fixes the inverted portion 161 a on the cap plate 151. Thus, the edge portion 161 b supports the inverted portion 161 a to be inverted in a secured manner.

The edge portion 161 b has a welded portion 161c formed at a lateral boundary abutting onto the cap plate 151. The welded portion 161 c may be formed by pulse welding. Alternatively, the welded portion 161c may also be formed by continuous welding, which is higher than pulse welding in view of welding intensity. The welding process for forming the welded portion 161 c is performed from a top end of the lateral boundary where the cap plate 151 and the edge portion 161 b come into contact with each other. Accordingly, the welded portion 161 c is configured such that a width of the welded portion 161 c is relatively large at the top end of the lateral boundary and tapers away from the top end. In an exemplary embodiment, the welded portion 161c may be formed in an inverted triangular shape.

Preferably, as can be seen from Fig. 3C, the cap plate 151 is provided with a step at the circumference of the short-circuiting hole 151 c such that the edge portion 161 b is fixed to the top surface of the step. Even more preferably, the top surface of the edge portion 161 b and the top surface of the cap plate 151 are formed to be aligned with each other. In other words, the height of the step matches the height of the edge portion 161 b. Through this, the welding portion 161c at the boundary of the edge portion 161b and the cap plate 151 becomes easily accessible and a large contact area between the cap plate 151 and the edge portion 161 b is formed.

Meanwhile, the edge portion 161 b has a recess or notch 161 d formed on its bottom surface abutting onto the cap plate 151. The recess 161 d is formed at an inner portion of the edge portion 161 b to have a rectangular cross section. The recess 161 d reduces a contact area between the bottom surface of the edge portion 161b and the cap plate 151. Accordingly, the edge portion 161 b provides flexibility to the inverted portion 161 a during inverting, thereby allowing the inverted portion 161 a to easily perform the inverting at a desired level of internal pressure, ultimately increasing the reliability of the secondary battery 100 according to an embodiment of the present invention.

In addition, the recess 161d is formed to be out of a region where the welded portion 161 c is formed. That is to say, the welded portion 161 c has a relatively large width at its the upper portion and a relatively small width at its lower portion when viewed from a lateral boundary of the edge portion 161 b, while the recess 161 d is formed to be directed toward the inside of the edge portion 161 b from the bottom surface of the edge portion 161 b. In such a manner, the recess 161d is formed to be vertically and horizontally out of the welded portion 161 c, i.e. three-dimensionally spaced apart from the welded portion 161 c. Therefore, the recess 161d may not be geometrically interfered during a welding process for forming the welded portion 161 c. In addition, when the recess 161d moves during the inverting operation of the inverted portion 161 a, it may not be interfered by the welded portion 161 b. Accordingly, the recess 161d may provide flexibility to the inverted portion 161 a independently of the welded portion 161 b.

The second short-circuiting member 162 is formed so as to insert the second electrode terminal 153 there into from the outside spaced apart from the cap plate 151, and extends so as to cover an upper part of the short-circuiting hole 151 c. The second short-circuiting member 162 is electrically connected to the second electrode terminal 153. Here, the second short-circuiting member 162 has top and bottom surfaces, both of which are flat, and is formed of copper. However, the invention does not limit the material of the second short-circuiting plate 162 to that listed herein.

As described above, in the secondary battery 100 according to an embodiment of the present invention, a recess 161d is formed on a bottom surface of the first short-circuiting member 161, an edge portion of which abuts onto the cap plate 151, and the recess 161 d is formed to be spaced apart from the welded portion 161 c to provide flexibility to the inverted portion 161 a during an inverting operation, thereby allowing the inverted portion 161 a to easily perform the inverting operation at a desired level of internal pressure.

A construction of a secondary battery according to another embodiment of the invention will now be described.

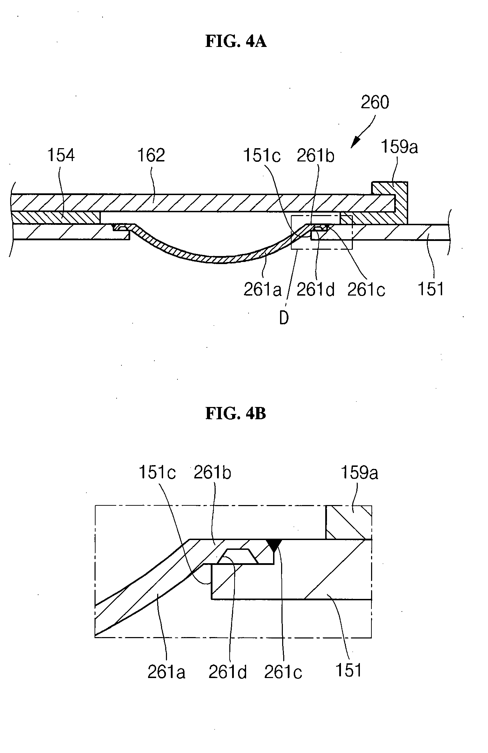

FIG. 4A is an enlarged view of a short-circuiting member of a secondary battery according to another embodiment of the present invention, and FIG. 4B is a partially enlarged view of a "D" portion of FIG. 4A.

Portions each having the same configuration and functions as those of the previous embodiment of the present invention are designated by the same reference numerals and a description will be mainly made below with emphasis placed on differences.

Referring to FIGS. 4A and 4B, the secondary battery according to another embodiment of the present invention includes a short-circuiting member 260. Like the secondary battery 100 according to the previous embodiment, the secondary battery may include an electrode assembly, a first collector plate, a second collector plate, a case, and a cap assembly, which are the same as the corresponding elements of the previous embodiment, and detailed descriptions thereof will not be given.

The short-circuiting member 260 is formed at an upper part of the cap assembly 150. The short-circuiting member 260 induces a short circuit when an internal pressure of the secondary battery 200 is greater than a reference pressure.

The short-circuiting member 260 includes a first short-circuiting member 261, and a second short-circuiting member 162. The second short-circuiting member 162 is the same as the corresponding element of the previous embodiment in view of configuration and operation.

The first short-circuiting member 261 includes an inverted portion 261 a and an edge portion 261 b. The inverted portion 261 a is the same as the corresponding element in view of configuration and operation.

The edge portion 261 b has a welded portion 261 c formed at a lateral boundary abutting onto the cap plate 151. In addition, the edge portion 261 b has a recess 261 d formed on its bottom surface abutting onto the cap plate 151.

The recess 261 d is formed at an inner portion of the edge portion 261 b to have a trapezoidal cross section. The trapezoidal shape is formed such that its bottom side positioned along the bottom surface of the edge portion 261 b is relatively long and its top side positioned inside the edge portion 261 c is relatively short. By contrast, a width of the welded portion 261 c is relatively large at the top end of the edge portion 261 b and tapers away from the top end of the edge portion 261 b. Thus, the recess 261 d may be formed to be out of the welded portion 261 c so as not to contact each other, thereby preventing geometrical interference during a welding process. In other words, recess 261 d is three-dimensionally spaced apart from the welded portion 261 c. In addition, sizes of the recess 261 d may be adjusted to have a desired size, irrespective of the welded portion 261 c. Further, greater flexibility of the inverted portion 261 a may be provided during inverting by increasing a length of the bottom side of the recess 261 c.

A construction of a secondary battery according to still another embodiment of the invention will now be described.

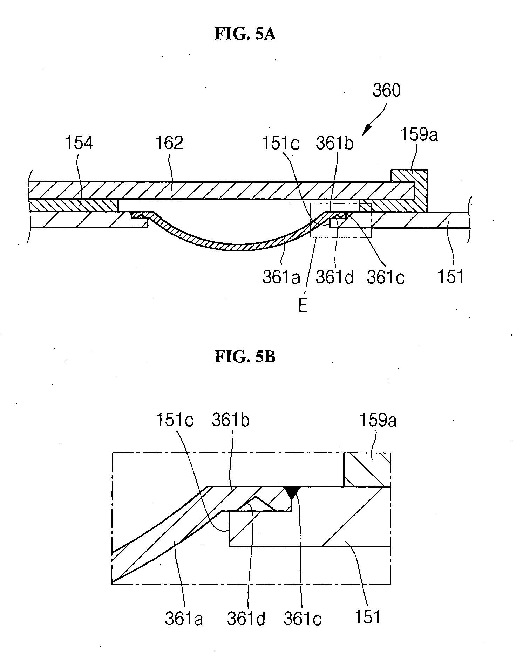

FIG. 5A is an enlarged view of a short-circuiting member of a secondary battery according to still another embodiment of the present invention, and FIG. 5B is a partially enlarged view of an "E" portion of FIG. 5A.

Referring to FIGS. 5A and 5B, the secondary battery according to still another embodiment of the invention includes a short-circuiting member 360. Like the secondary battery 100 according to the previous embodiment, the secondary battery may include an electrode assembly, a first collector plate, a second collector plate, a case, and a cap assembly, which are the same as the corresponding elements of the previous embodiment, and detailed descriptions thereof will not be given.

The short-circuiting member 360 includes a first short-circuiting member 361 and a second short-circuiting member 362. The second short-circuiting member 362 is the same as the corresponding element of the previous embodiment in view of configuration and operation.

The first short-circuiting member 361 includes an inverted portion 361 a and an edge portion 361 b. The inverted portion 361 a is the same as the corresponding element in view of configuration and operation.

The edge portion 361b has a welded portion 361c formed at a lateral boundary abutting onto the cap plate 151. In addition, the edge portion 361 b has a recess 361 d formed on its bottom surface abutting onto the cap plate 151.

The recess 361 d is formed at an inner portion of the edge portion 361 b to have a triangular cross section. The triangular shape is formed such that its bottom side is positioned along the bottom surface of the edge portion 361 b and its vertex is formed at the inner portion of the edge portion 361 b. Thus, the recess 361 d may be formed to be out of the welded portion 361 c so as not to contact each other, thereby preventing geometrical interference during a welding process. In addition, sizes of the recess 361 d may be adjusted to have a desired size, irrespective of the welded portion 361 c. Further, greater flexibility of the inverted portion 361 a may be provided during inverting by increasing a length of the bottom side of the recess 361 d.

A construction of a secondary battery according to still another embodiment of the invention will now be described.

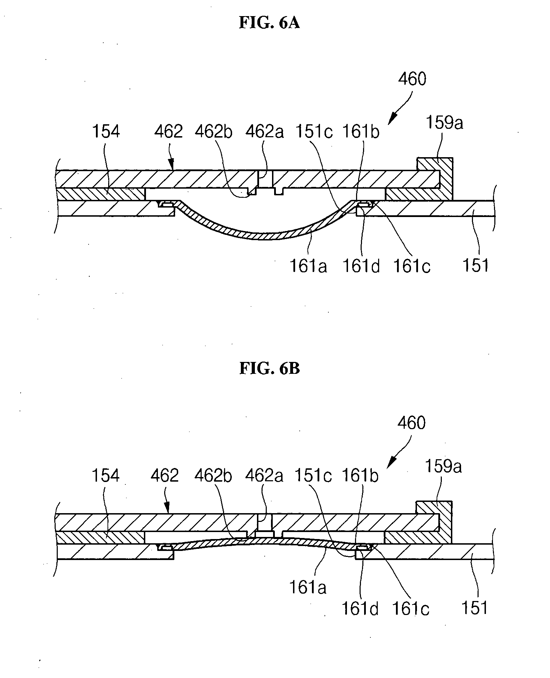

FIG. 6A is an enlarged view of a short-circuiting member of a secondary battery according to still another embodiment of the present invention, and FIG. 6B illustrates a state in which the short-circuiting member shown in FIG. 6A is inverted.

Referring to FIGS. 6A and 6B, the secondary battery according to still another embodiment of the invention includes a short-circuiting member 460. Like the secondary battery 100 according to the previous embodiment, the secondary battery may include an electrode assembly, a first collector plate, a second collector plate, a case, and a cap assembly, which are the same as the corresponding elements of the previous embodiment, and detailed descriptions thereof will not be given.

The short-circuiting member 460 includes a first short-circuiting member 161 and a second short-circuiting member 462. The first short-circuiting member 161 is the same as the corresponding element of the previous embodiment in view of configuration and operation.

The second short-circuiting member 462 may include a hole 462a and a protrusion 462b formed at regions corresponding to the inverted portion 161 a of the first short-circuiting member 161.

When a short-circuit occurs due to a contact between the first short-circuiting member 161 and the second short-circuiting member 462, the hole 462a functions to maintain the flow of current at a uniform level. That is to say, resistance may rise at a contact area between the first short-circuiting member 161 and the second short-circuiting member 462. In such an event, the hole 462a increases the contact area between the first short-circuiting member 161 and the second short-circuiting member 462, thereby reducing the resistance at the contact area between the inverted portion 161 a of the first short-circuiting member 161 and the second short-circuiting member 462.

The protrusion 462b is formed on a surface opposite to and facing the inverted portion 161 a of the first short-circuiting member 161, and protrudes in the vicinity of the hole 462a. The protrusion 462b reduces a distance between the first short-circuiting member 161 and the second short-circuiting member 462. Thus, when the inverted portion 161 a of the first short-circuiting member 161 is inverted, it comes into contact with the protrusion 462b of the second short-circuiting member 462. Accordingly, the protrusion 462b makes the first short-circuiting member 161 and the second short-circuiting member 462 contacts each other in a more secured manner.

Although the present invention has been described with reference to the preferred examples, the foregoing disclosure should be interpreted as illustrative only for implementing a secondary battery and it should be understood that various modifications and variations can be easily made by those skilled in the art without departing from the scope of the invention. Accordingly, the true scope of the invention is defined by the following claims.

## Claims

1. A secondary battery (100) comprising:
an electrode assembly (110) having a first electrode (111), a second electrode (112),
and a separator (113) interposed between the first and the second electrodes (111, 112);
a case (140) accommodating the electrode assembly (110) therein;
a cap assembly attached to the case (140) and including a cap plate (151) having an opening (151c); and
a first short-circuiting member (161) comprising:
an inverting portion (161 a) provided within the opening (151 c) of the cap plate (151), being in communication with and projecting into an interior of the case (140), and
an edge portion (161b) having a fixing portion (161c) fixed to the cap plate (151),
**characterized in that**
a recess (161 d) is formed in a surface of the edge portion (161 b) contacting the cap plate (151).

2. The battery of claim 1, wherein the vertical cross-section of the recess (161 d, 261 d, 361 d) is formed to have a rectangular, trapezoidal or triangular shape.

3. The battery of any of the previous claims, wherein the edge portion (161 b) at least partially overlaps with the cap plate (151) and wherein an opening of the recess (161d) in the edge portion (161 b) fully overlaps with the cap plate (151).

4. The battery of any of the previous claims, wherein the edge portion (161 c) surrounds the inverting portion (161 a) and/or is a circumferential portion of the inverting portion (161 a).

5. The battery of any of the previous claims, wherein the cap plate (151) is provided with a step and the edge portion (161 b) at least partially contacts the step.

6. The battery of any of the previous claims, wherein the thickness of the cap plate (151) where the edge portion (161 b) is formed on is thinner than other parts of the cap plate (151).

7. The battery of any of the previous claims, wherein the fixing portion (161 c) and the recess (161d) are spaced apart from each other.

8. The battery of any of the previous claims, wherein the fixing portion (161 c) is a welding portion.

9. The battery of any of the previous claims, wherein the fixing portion (161 c) is configured to have a decreasing width from the top surface of the edge portion (161 b) towards the bottom surface of the edge portion (161 b).

10. The battery of any of the previous claims, wherein the recess (161 c) is configured to have a constant or decreasing width form the bottom surface of the edge portion (161 b) towards the top surface of the edge portion (161b).

11. The battery of any of the previous claims, wherein a lower surface of the first short-circuiting member (161) is attached to an upper surface of the periphery of the opening (151c) in the cap plate (151).

12. The battery of any of the previous claims, wherein the inverting portion (161 a) is adapted to invert its shape to protrude outwardly with respect to the case (140) upon a pressure increase in the interior of the case (140).

13. The battery of any of the previous claims, wherein a second short-circuiting member (162) is formed on and insulated from the cap plate (151) above the opening (151 c) in the cap plate (151), the second short-circuiting member (162) being electrically coupled to the second electrode (112) and the first short-circuiting member (161) being electrically coupled to the first electrode (111).

14. The battery of claim 13, wherein the inverting portion (161 a) of the first short-circuiting member (161) is adapted to invert its shape to contact the second short-circuiting member (162) upon an increase of a pressure in the interior of the case (140) to connect the first electrode (111) with the second electrode (112).

15. The battery of claim 13 or 14, wherein the second short-circuiting member (462) includes a hole (462a) and a protrusion (462b) extending towards the first short-circuiting member (461) and formed at locations corresponding to the location where the first short-circuiting member (461) contacts the second short-circuiting member (462).

## Patentansprüche

1. Sekundärbatterie (100), umfassend:
eine Elektrodenanordnung (110) mit einer ersten Elektrode (111), einer zweiten Elektrode (112) und einem zwischen die erste und die zweite Elektrode (111, 112) geschalteten Separator (113);
ein die Elektrodenanordnung (110) aufnehmendes Gehäuse (140);
eine Abdeckanordnung, die an dem Gehäuse (140) angebracht ist und eine Abdeckplatte (151) mit einer Öffnung (151c) aufweist; sowie
ein erstes Kurzschlusselement (161), umfassend:
einen in der Öffnung (151 c) der Abdeckplatte (151) vorgesehenen Umkehrabschnitt (161a), der in Verbindung mit einen Inneren des Gehäuses (140) steht und in diesen hineinragt, und
einen Randabschnitt (161 b) mit einem an der Abdeckplatte (151) befestigten Befestigungsabschnitt (161c),
**dadurch gekennzeichnet, dass**
in einer Fläche des die Abdeckplatte (151) kontaktierenden Randabschnitts (161 b) eine Aussparung (161d) ausgebildet ist.

2. Batterie nach Anspruch 1, wobei der senkrechte Querschnitt der Aussparung (161 d, 261 d, 361 d) derart ausgebildet ist, dass er eine rechteckige, trapezförmige oder dreieckige Form aufweist.

3. Batterie nach einem der vorstehenden Ansprüche, wobei der Randabschnitt (161 b) die Abdeckplatte (151) mindestens teilweise überlappt, und wobei eine Öffnung der Aussparung (161d) in dem Randabschnitt (161b) die Abdeckplatte (151) vollständig überlappt.

4. Batterie nach einem der vorstehenden Ansprüche, wobei der Randabschnitt (161 c) den Umkehrabschnitt (161 a) umgibt und/oder ein Umfangsabschnitt des Umkehrabschnitts (161 a) ist.

5. Batterie nach einem der vorstehenden Ansprüche, wobei die Abdeckplatte (151) mit einer Stufe versehen ist und der Randabschnitt (161 b) mindestens teilweise mit der Stufe in Kontakt ist.

6. Batterie nach einem der vorstehenden Ansprüche, wobei die Dicke der Abdeckplatte (151), auf der der Randabschnitt (161 b) ausgebildet ist, dünner als andere Teile der Abdeckplatte (151) ist.

7. Batterie nach einem der vorstehenden Ansprüche, wobei der Befestigungsabschnitt (161c) und die Aussparung (161d) voneinander beabstandet sind.

8. Batterie nach einem der vorstehenden Ansprüche, wobei der Befestigungsabschnitt (161c) ein Schweißabschnitt ist.

9. Batterie nach einem der vorstehenden Ansprüche, wobei der Befestigungsabschnitt (161c) derart ausgeführt ist, dass seine Breite von der oberen Fläche des Randabschnitts (161 b) zur unteren Fläche des Randabschnitts (161 b) hin abnimmt.

10. Batterie nach einem der vorstehenden Ansprüche, wobei die Aussparung (161 c) derart ausgeführt ist, dass ihre Breite von der unteren Fläche des Randabschnitts (161 b) zur oberen Fläche des Randabschnitts (161 b) hin konstant ist oder abnimmt.

11. Batterie nach einem der vorstehenden Ansprüche, wobei eine untere Fläche des ersten Kurzschlusselements (161) an einer oberen Fläche des Umfangs der Öffnung (151 c) in der Abdeckplatte (151) angebracht ist.

12. Batterie nach einem der vorstehenden Ansprüche, wobei der Umkehrabschnitt (161a) angepasst ist, bei einem Druckanstieg im Inneren des Gehäuses (140) seine Form derart umzukehren, dass er in Bezug auf das Gehäuse (140) nach außen vorsteht.

13. Batterie nach einem der vorstehenden Ansprüche, wobei ein zweites Kurzschlusselement (162) auf der Abdeckplatte (151) ausgebildet und über der Öffnung (151 c) in der Abdeckplatte (151) von dieser isoliert ist, wobei das zweite Kurzschlusselement (162) elektrisch mit der zweiten Elektrode (112) verbunden ist und das erste Kurzschlusselement (161) elektrisch mit der ersten Elektrode (111) verbunden ist.

14. Batterie nach Anspruch 13, wobei der Umkehrabschnitt (161 a) des ersten Kurzschlusselements (161) angepasst ist, bei einem Druckanstieg im Inneren des Gehäuses (140) seine Form derart umzukehren, dass ein Kontakt zum zweiten Kurzschlusselement (162) hergestellt wird, um die erste Elektrode (111) mit der zweiten Elektrode (112) zu verbinden.

15. Batterie nach Anspruch 13 oder 14, wobei das zweite Kurzschlusselement (462) ein Loch (462a) und einen Vorsprung (462b) aufweist, der sich zum ersten Kurzschlusselement (461) hin erstreckt und an Stellen ausgebildet ist, die der Stelle entsprechen, an der das erste Kurzschlusselement (461) das zweite Kurzschlusselement (462) kontaktiert.

## Revendications

1. Batterie secondaire (100), comprenant :
un ensemble d'électrodes (110) comportant une première électrode (111), une deuxième électrode (112) et un séparateur (113), interposé entre la première et la deuxième électrodes (111, 112) ;
un boîtier (140) recevant l'ensemble d'électrodes (110) à l'intérieur de celui-ci ;
un ensemble de capuchon fixé au boîtier (140), et comprenant une plaque de capuchon (151) comportant une ouverture (151c) ; et
un premier élément de court-circuit (161), comprenant :
une partie d'inversion (161a) disposée à l'intérieur de l'ouverture (151c) de la plaque de capuchon (151), qui est en communication avec l'intérieur du boîtier (140) et qui fait saillie à l'intérieur de celui-ci, et
une partie de bord (161b) comportant une partie de fixation (161c) fixée à la plaque de capuchon (151),
**caractérisée en ce que** :
une cavité (161d) est formée dans une surface de la partie de bord (161b) venant en contact avec la plaque de capuchon (151).

2. Batterie selon la revendication 1, dans laquelle la section transversale verticale de la cavité (161d, 261d, 361d) est formée de façon à avoir une forme rectangulaire, trapézoïdale ou triangulaire.

3. Batterie selon l'une quelconque des revendications précédentes, dans laquelle la partie de bord (161b) chevauche au moins partiellement la plaque de capuchon (151), et dans laquelle une ouverture de la cavité (161d) dans la partie de bord (161b) chevauche totalement la plaque de capuchon (151).

4. Batterie selon l'une quelconque des revendications précédentes, dans laquelle la partie de bord (161c) entoure la partie d'inversion (161a) et/ou est une partie circonférentielle de la partie d'inversion (161a).

5. Batterie selon l'une quelconque des revendications précédentes, dans laquelle la plaque de capuchon (151) est munie d'un épaulement, et la partie de bord (161b) vient au moins partiellement en contact avec l'épaulement.

6. Batterie selon l'une quelconque des revendications précédentes, dans laquelle l'épaisseur de la plaque de capuchon (151) à l'endroit sur lequel est formée la partie de bord (161b) est plus mince que celle d'autres parties de la plaque de capuchon (151).

7. Batterie selon l'une quelconque des revendications précédentes, dans laquelle la partie de fixation (161c) et la cavité (161d) sont mutuellement espacées l'une de l'autre.

8. Batterie selon l'une quelconque des revendications précédentes, dans laquelle la partie de fixation (161c) est une partie de soudage.

9. Batterie selon l'une quelconque des revendications précédentes, dans laquelle la partie de fixation (161c) est configurée de façon à avoir une largeur décroissante à partir de la surface supérieure de la partie de bord (161b) vers la surface inférieure de la partie de bord (161b).

10. Batterie selon l'une quelconque des revendications précédentes, dans laquelle la cavité (161c) est configurée de façon à avoir une largeur constante ou décroissante à partir de la surface inférieure de la partie de bord (161b) vers la surface supérieure de la partie de bord (161b).

11. Batterie selon l'une quelconque des revendications précédentes, dans laquelle une surface inférieure du premier élément de court-circuit (161) est attachée à une surface supérieure de la périphérie de l'ouverture (151c) dans la plaque de capuchon (151).

12. Batterie selon l'une quelconque des revendications précédentes, dans laquelle la partie d'inversion (161a) est adaptée de façon à inverser sa forme de façon à faire saillie vers l'extérieur par rapport au boîtier (140) lors d'une augmentation de pression à l'intérieur du boîtier (140).

13. Batterie selon l'une quelconque des revendications précédentes, dans laquelle un deuxième élément de court-circuit (162) est formé sur la plaque de capuchon (151), et isolé vis-à-vis de celle-ci, au-dessus de l'ouverture (151c) dans la plaque de capuchon (151), le deuxième élément de court-circuit (162) étant électriquement couplé à la deuxième électrode (112), et le premier élément de court-circuit (161) étant électriquement couplé à la première électrode (111).

14. Batterie selon la revendication 13, dans laquelle la partie d'inversion (161a) du premier élément de court-circuit (161) est adapté de façon à inverser sa forme de façon à venir en contact avec le deuxième élément de court-circuit (162) lors d'une augmentation d'une pression à l'intérieur du boîtier (140), de façon à connecter la première électrode (111) à la deuxième électrode (112).

15. Batterie selon la revendication 13 ou 14, dans laquelle le deuxième élément de court-circuit (462) comprend un trou (462a) et une saillie (462b) s'étendant vers le premier élément de court-circuit (461) et formés en des emplacements correspondant à l'emplacement où le premier élément de court-circuit (461) vient en contact avec le deuxième élément de court-circuit (462).
